# EUROPÄISCHE PATENTANMELDUNG

(11) **EP 2 660 770 A1**
(43) Veröffentlichungstag der Anmeldung: **06.11.2013**
(21) Anmeldenummer: 13165337.0
(22) Anmeldetag: 25.04.2013
(51) Int. Cl.: G06Q 50/06, G06Q 10/06

(54) **Verfahren und System zum Überwachen des Energie- oder Wasserverbrauchs**

(30) Priorität: 02.05.2012 DE 102012103816; 11.05.2012 DE 102012104162
(71) Anmelder: Stadt Aachen Gebäudemanagement, 52058 Aachen (DE)
(72) Erfinder: Lehmenkühler, Markus, 52072 Aachen (DE); Lambertz, Martin, 52156 Monschau (DE)
(74) Vertreter: Kohlmann, Kai

(57) **Zusammenfassung**

Die Erfindung betrifft ein Verfahren und System zum Überwachen des Energie- oder Wasserverbrauchs von Gebäuden. Um das aktuelle Verbrauchsverhalten eines Gebäudes beurteilen und unzulässig hohe sowie auffällig niedrige Verbräuche zeitnah automatisch zu erkennen und zu signalisieren, wird vorgeschlagen durch Erfassen von Verbrauchsdaten sowie von Umgebungsdaten, die mit den Verbrauchsdaten in einem kausalen Zusammenhang stehen, in einem Erhebungszeitraum automatisch eine Funktion zu ermitteln, die einen Sollverbrauch in Abhängigkeit von den Umgebungsdaten definiert. Ein Störungssignal wird erzeugt, sofern die nach dem Erhebungszeitraum erfassten Verbrauchsdaten außerhalb einer Hüllkurve der Funktion liegen.

## Beschreibung

Die Erfindung betrifft ein Verfahren und ein System zur Überwachung des Energie- oder Wasserverbrauchs von Gebäuden.

Städtische Gebäude verursachen insbesondere während ihrer Betriebszeiten nicht unerhebliche Energie- und Wasserverbräuche. Um diese Verbräuche zu senken, die Umwelt zu entlasten und zugleich die Betriebskosten der Gebäude zu reduzieren, überwacht die Stadt Aachen bereits seit mehreren Jahren die Energie- und Wasserverbräuche ihrer Gebäude. Derzeit werden die Verbräuche von 167 Gebäuden mit mehr als 1000 Zählern überwacht und die Verbrauchsdaten an einen Server übertragen und dort in einer Datenbank gespeichert. Zum Überwachen des Energieverbrauchs wurde in der Vergangenheit üblicherweise der Jahresverbrauch der Gebäude betrachtet. Die Überwachung von kürzeren Zeiträumen war nicht vorgesehen. Des Weiteren erlaubte die bisherige Überwachung des Energie- und Wasserverbrauchs keine zeitnahe Erkennung von unzulässig hohen oder auffällig nach unten abweichenden Verbräuchen.

Die Verbrauchsdaten beziehen sich auf den Energie- und Wasserverbrauch. Unter Energieverbrauch (Brennstoff, Wärme, elektrische Energie) wird der gemessene Energieeinsatz verstanden, der ins Gebäude zur Umwandlung für den jeweiligen Nutzungszweck, beispielsweise Wärme, Licht, Kraft gelangt.

Zur Vergleichbarkeit verschiedener Gebäude wird der Energieverbrauch und Wasserverbrauch eines Jahres ermittelt und auf die Fläche des Gebäudes bezogen. Hieraus resultiert der so genannte Verbrauchkennwert.

Der Heizenergieverbrauchskennwert ergibt sich aus dem gesamten Energieverbrauch für die Wärmeversorgung

(Brennstoff, Wärme, elektrische Energie) und aus der Bezugsfläche des Gebäudes.

Der Stromverbrauchskennwert stellt den auf die Bezugsfläche bezogenen Stromverbrauch eines Jahres dar.

Aus der DE 10 2009 019 409 A1 ist ein Verfahren zur Ermittlung des Energieverbrauchs und/oder von Rohstoffen in Gebäuden bekannt. So genannte intelligente Zähler (Smart Meter) für Strom, Wasser und Gas, werden an den Schnittstellen zwischen Endverbrauchern und Versorgungsunternehmen eingebaut. Die intelligenten Zähler verfügen über eine Datenschnittstelle, über die sie mit dem Versorgungsunternehmen kommunizieren. Hierdurch erhält das Versorgungsunternehmen Informationen über den Verbrauch des Energieträgers oder Rohstoffs, während andererseits Informationen über die Tarife für den Energieträger oder Rohstoff an den Endkunden übermittelt werden. Durch die Verknüpfung wird ein Steuern von Endgeräten beim Endverbraucher möglich. Die Endgeräte werden derart gesteuert, dass sie die für den Betrieb notwendige Energie und andere Rohstoffe zu Zeitpunkten verbrauchen, in denen die Erzeugung dieser Energie bzw. die Bereitstellung der Rohstoffe besonders umweltschonend oder ökonomisch möglich ist.

Ausgehend von diesem Stand der Technik liegt der Erfindung die Aufgabe zu Grunde, ein Verfahren zum Überwachen des Energie- oder Wasserverbrauchs sowie ein System zur Durchführung des Verfahrens vorzuschlagen, mit dem das aktuelle Verbrauchsverhalten eines Gebäudes beurteilt und unzulässig hohe sowie auffällig niedrige Verbräuche zeitnah automatisch erkannt und signalisiert werden können.

Diese Aufgabe wird durch ein Verfahren mit den Merkmalen des Anspruchs 1 sowie ein System mit den Merkmalen des Anspruchs 11 gelöst.

Vorteilhafte Ausgestaltung des Verfahrens bzw. Systems ergeben sich aus den Unteransprüchen 3 - 10 sowie dem Unteranspruch 12.

Die Erfassung von Verbrauchsdaten in dem jeweiligen Gebäude erfolgt in einem festgelegten Zeitraum eines Tages. Insbesondere bei kommunalen Gebäuden lässt sich die Nutzung des Gebäudes in Betriebs- und Nicht-Betriebs-Phasen unterteilen. An Werktagen entsprechen die Betriebsphasen den Arbeits-/Öffnungszeiten des kommunalen Gebäudes, so dass beispielsweise die Zeit von 08:00 bis 17:00 Uhr als Zeitraum zum Erfassen von Verbrauchsdaten festgelegt werden kann.

Ferner können die Verbrauchsdaten zusätzlich oder alternativ in Nicht-Betriebs-Phasen erfasst werden, beispielsweise in einem festgelegten Zeitraum von 17:00 bis 22:00 oder von 22:00 bis 24:00 Uhr. Selbstverständlich liegt es im Rahmen der Erfindung, auch kürzere Zeiträume eines Tages zum Erfassen der Verbrauchsdaten festzulegen.

Um jedoch sinnvolle Aussagen über das Verbrauchsverhalten eines bestimmten Gebäudes in einem Erhebungszeitraum abhängig von Umgebungsdaten zu erhalten, ist es zweckmäßig, dass jeder festgelegte Zeitraum zum Erfassen der Verbrauchsdaten vollständig entweder in eine Betriebs- oder Nicht-BetriebsPhase des Gebäudes fällt.

Grundsätzlich ist es ausreichend, in dem festgelegten Zeitraum zur Ermittlung der Verbrauchsdaten den Zählerstand zu Anfang und zum Ende des festgelegten Zeitraums auszulesen und den Gesamtenergie- oder Wasserverbrauch in dem festgelegten Zeitraum zu erfassen. Alternativ besteht die Möglichkeit, die Verbrauchsdaten in dem festgelegten Zeitraum fortlaufend zu erfassen, so dass sich ein Verbrauchsprofil für den festgelegten Zeitraum unter Berücksichtigung der Umgebungsdaten ergibt. Für ein gutes Verbrauchscontrolling wird eine hohe Auslesefrequenz benötigt. Die Verbrauchsdaten werden mit einer Auslesefrequenz von 1 / 15 min bis 1 / 1 min erfasst.

Die Umgebungsdaten werden an demselben Tag, vorzugsweise zeitgleich mit den Verbrauchsdaten erfasst. Die Umgebungsdaten stehen mit den Verbrauchsdaten in einem kausalen Zusammenhang. Die Umgebungsdaten werden vorzugsweise mit übereinstimmender Auslesefrequenz ausgelesen, insbesondere mit einer Auslesefrequenz von 1 / 15 min bis 1 / 1 min.

Sofern beispielsweise der Wärmeverbrauch des Gebäudes erfasst wird, können als Umgebungsdaten die Außentemperaturen des Gebietes, in dem sich das Gebäude befindet, erfasst werden. Üblicherweise wird die Mitteltemperatur des festgelegten Zeitraumes bzw. des Erfassungstages erfasst.

Wird indes der Stromverbrauch des Gebäudes erfasst, können als Umgebungsdaten insbesondere die Außenlichtstärke oder der Bedeckungsgrad des Gebietes, in dem sich das Gebäude befindet, erfasst werden. Üblicherweise wird die mittlere Außenlichtstärke oder der mittlere Bedeckungsgrad des festgelegten Zeitraumes bzw. des Erfassungstages erfasst. Der Bedeckungsgrad gibt an, wie groß der Anteil des Himmelsgewölbes ist, der insgesamt mit Wolken bedeckt ist. Eine Angabe erfolgt in 1/8, wobei 0/8 bedeutet, dass das Himmelsgewölbe wolkenfrei ist, während 8/8 eine vollständige Bedeckung des Himmelsgewölbes mit Wolken definiert. Die Außenlichtstärke ist die in der Umgebung des Gebäudes gemessene Lichtstärke aufgrund der Sonneneinstrahlung.

Die Erfassung der Verbrauchs- und Umgebungsdaten wird periodisch über einen langen Erhebungszeitraum wiederholt. Der Erhebungszeitraum beträgt üblicherweise mindestens ein Jahr. Die erfassten Verbrauchs- und Umgebungsdaten werden in eine Datenbank auf einem Server übertragen und dort gespeichert.

Mit einer Auswertesoftware auf dem Server werden Datenpunkte durch Zuordnen der erfassten Verbrauchsdaten zu den am selben Tag erfassten Umgebungsdaten erstellt. Dies bedeutet, dass beispielsweise der gesamte Wärmeverbrauch in einem festgelegten Zeitraum eines Tages einer an demselben Tag erfassten Tagesmitteltemperatur zugeordnet wird. Alternativ wird dem Wärmeverbrauchsprofil in dem festgelegten Zeitraum eine Tagesmitteltemperatur oder ein Temperaturprofil über einen festgelegten Zeitraum zugeordnet.

Aus der Vielzahl der im Erhebungszeitraum erstellten Datenpunkte (Datenpunktwolke) ermittelt die Auswertesoftware nach Beendigung des Erhebungszeitraums eine Funktion im Wege einer Ausgleichsrechnung. Die Ausgleichsrechnung dient dem Zweck zu den im Erhebungszeitraum erstellten Datenpunkten eine Kurve, insbesondere Gerade zu suchen, die möglichst nah an den Datenpunkten verläuft. Für die Ausgleichsrechnung wird vorzugsweise die Methode der kleinsten Quadrate eingesetzt. Die Ermittlung dieser Funktion erfolgt nach Abschluss des Erhebungszeitraums voll automatisch.

Anschließend legt die Auswertesoftware eine Hüllkurve mit einer außenliegenden und einer innenliegenden Äquidistanten zu der Funktion fest, wobei die beiden Äquidistanten eine maximal und eine minimal zulässige Abweichung der Verbrauchsdaten von der Funktion definieren. Der Abstand der Äquidistanten zu der Funktion kann durch den Nutzer vorgegeben bzw. von der Auswertesoftware unter Berücksichtigung von Parametern bestimmt werden. Mittels der Parameter kann eine Parallelverschiebung der Äquidistanten durchgeführt werden. Hierzu wird mit einem festgelegten Prozentsatz der entsprechende Wert der Funktion, insbesondere der Ausgleichsgeraden angehoben bzw. abgesenkt.

### Beispiel:

| | |
|---|---|
| Ausgleichsgerade: | y = 18 * t + 240 |
| Äquidistante: | Y = (18 * t + 240) * x % |

| | |
|---|---|
| | |

mit x % = festgelegter Prozentsatz

Nach dem Abschluss des Erhebungszeitraums zur Ermittlung der vorstehend beschriebenen Funktion, wird das Erfassen der Verbrauchs- und Umgebungsdaten, wie eingangs erläutert, unverändert fortgesetzt. Die dabei erfassten Verbrauchsdaten werden weiterhin in die Datenbank auf dem Server übertragen und von der Auswertesoftware verarbeitet. Stellt die Auswertesoftware fest, dass ein Datenpunkt außerhalb der Hüllkurve liegt, wird automatisch ein Störungssignal erzeugt. Das Störungssignal kann beispielsweise an einer Anzeigeeinheit angezeigt oder per E-Mail oder SMS an eine bestimmte Adresse gemeldet werden.

Die Auswertesoftware ermöglicht es darüber hinaus, unter anderem die sich aus der ermittelten Funktion ergebenden Soll-Verbrauchsdaten, dass sind diejenigen Verbrauchsdaten, die sich aufgrund der Funktion zu bestimmten Umgebungsdaten ergeben, im Wege der Datenfernübertragung einem Nutzer zugänglich zu machen. Darüber hinaus besteht die Möglichkeit dem Nutzer im Wege der Datenfernübertragung den in dem festgelegten Zeitraum aktuell erfassten Verbrauch sowie die Umgebungsdaten zugänglich zu machen. Die Datenfernübertragung kann beispielsweise über das Internet erfolgen, so dass ein Nutzer des Gebäudes unmittelbar das Verbrauchsverhalten des Gebäudes abrufen, beurteilen und ggf. beeinflussen kann.

Als Mittel zur periodischen Wiederholung der Erfassung der Verbrauchs und/oder Umgebungsdaten kommt insbesondere ein Datenlogger in Betracht. Hierbei handelt es sich um eine der Datenübertragungsvorrichtung zum Übertragen der Verbrauchsdaten und/oder der Umgebungsdaten vorgeschaltete Prozessor gesteuerte Speichereinheit, welche die Daten in einem bestimmten Rhythmus über eine Schnittstelle aufnimmt und in der Speichereinheit speichert. Die Verbrauchs- und/oder Umgebungsdaten werden mit einer Auslesefrequenz von 1 / 15 min bis 1 / 1 min erfasst.

Der Datenlogger erfasst und verwaltet selbstständig alle Daten einer Installation mit bis zu 250 Auslesevorrichtungen. Mit einstellbarer Auslesfrequenz liest er die angeschlossenen Auslesevorrichtungen aus und speichert die Zählerstände dauerhaft. Zur Datenauslesung besitzt der Datenlogger an der Sekundär-Seite eine serielle Schnittstelle, insbesondere ein RS-232 Interface. Über diese serielle Schnittstelle ist es möglich, eine Verbindung mit dem Datenlogger herzustellen. Der Datenlogger kann als Hardwarekomponente ausgeführt sein oder alternativ auch als Pegelwandler, insbesondere M-Bus-Pegelwandler und Rechner mit einer entsprechenden Software.

Die Verbindung zu den Auslesevorrichtungen erfolgt über ein Bus-System, insbesondere ein M-Bus-System. Der M-Bus (meterbus, englisch) ist ein europäischer Standard zur Fernauslesung von Verbrauchszählern. In der europäischen Norm DIN EN 1434-3 ist der Datenaustausch und die galvanische Schnittstelle zur Auslesung standardisiert. Von einer zentralen Stelle, dem Datenlogger werden die Auslesevorrichtungen fast aller Arten von Verbrauchszählern abgefragt und im Protokoll übertragen. Von dem Datenlogger werden die ausgelesenen Daten exportiert. Der M-Bus ist optimiert auf die Abfrage von dezentral erfassten Messwerten und arbeitet nach dem Master-Slave-Verfahren.

Der Datenlogger leitet die Kommunikation ein und adressiert die einzelnen Auslesvorrichtungen direkt durch die eingestellte Primäradresse 1...250. Die Adressierung kann auch über die Sekundäradresse erfolgen. Bei der Primäradressierung sendet der Datenlogger eine Aufforderung zur Datenübermittlung an die Auslesevorrichtung 1..250. Die adressierte Auslesevorrichtung antwortet daraufhin mit einem Standard-Datensatz, der im einfachsten Fall aus Zählerstand, gemessenem Medium, Gerätetyp, Seriennummer und Herstellercode besteht.

Um eine Kommunikation zwischen dem Datenlogger und der Auslesevorrichtung herzustellen, müssen die Auslesevorrichtungen und der Datenlogger die gleiche Baudrate haben. Die Baudrate kann zwischen 300 und 9600 Baud liegen. Sie ist i.d.R. auf 2400 Baud eingestellt und kann zentral über den M-Bus verändert werden.

Eigenschaften des M-Busses:
- Die Daten werden elektronisch ausgelesen
- Alle Verbrauchszähler des M-Bus-Systems werden durch ein zweiadriges Kabel mit dem Datenlogger verbunden
- Beliebige Netzwerktopologie (lineare, Ring, Stern)
- Bis zu 250 Verbrauchszähler anschließbar
- Verpolungssichere serielle Verbindung und Energieversorgung
- Alle Verbrauchszähler sind individuell primär oder sekundär adressierbar
- galvanische Trennung und Kurzschlussfestigkeit der Verbrauchszähler
- Übertragungsgeschwindigkeit 300-9600 Baud
- Fehlererkennung über Parität und Checksumme

Neben dem bevorzugten M-Bus-System für die

Zählerfernauslesung können die Auslesevorrichtungen über die nachfolgend genannten Systeme ausgelesen werden:

Der D-Bus ist ein Bus-System zur Zählerauslesung, das ähnlich wie das M-Bus-System nach dem Master- Slave-Verfahren arbeitet.

Der LON-Bus (Local Operating Network) ermöglicht einen neutralen Informationsaustausch zwischen Anlagen und Geräten von verschiedensten Herstellern und unabhängig von den Anwendungen. Er wurde speziell für die Gebäude-Automatisierung entwickelt. Eine Übertragung der Zählerdaten mittels LON-Bus wird überwiegend dort eingesetzt, wo bereits eine auf LON basierende Automatisationstechnik vorhanden ist.

Der EIB/KNX-Bus (Europäische Installationsbus) wird hauptsächlich in der Gebäude- Installation eingesetzt. Mit der EIB-Technik wird die Stromversorgung der Geräte und ihrer zugehörigen Steuerung getrennt. Mehrere Hersteller haben mittlerweile Konverter und Softwaretools entwickelt, die eine Übertragung der Zählerdaten über EIB ermöglichen.

Die Impuls Übertragung (basiert auf DIN 19234 Namur = Normierungs und Arbeitsgemeinschaft ... für Messtechnik in der chemischen Industrie, nicht proprietär für Zähler): Die Zählerstandübermittlung mittels Impulsausgang ist weit verbreitet. Dieser Umstand ist dadurch begründet, dass der Ausgang zum einen sehr einfach hergestellt werden kann, zum anderen auf alle Zählerarten angewendet werden kann. Weiterhin kann durch den Einbau von Konvertern der Übergang auf andere Systeme z.B. M-Bus hergestellt werden.

Für die Datenübertragung per Funk können kostenpflichtige Dienste wie GSM oder UMTS genutzt werden, oder freie Funkdienste auf den ISM Bändern 433MHz, 886MHz und 2400 MHz. Die kostenpflichtigen Dienste können genutzt werden, wie ein Standardmodem oder eine Netzwerkanbindung. Im normalen GSM Netz sind somit Datenraten bis zu 9,6 kBaud möglich.

Nachfolgend werden die insbesondere an das M-Bus-System anschließbaren Auslesevorrichtungen für die Verbrauchsdaten näher erläutert. Jeder Zähler für Verbrauchsdaten ist jeweils mit einer Auslesevorrichtung ausgerüstet:

Ein Gaszähler wird vorzugsweise mit Encoder-Zählwerk ausgerüstet, das die Vorteile mechanischer und elektronischer Zählwerke kombiniert. Die einzelnen Räder des mechanischen Zählwerkes werden von dem Encoder auf optoelektronischem Wege abgetastet. Dazu besitzen die einzelnen Räder insbesondere drei unterschiedlich lange und asymmetrisch angeordnete Schlitze, die mit fünf Lichtschranken auf ihre Stellung hin abgetastet werden. Die Schlitze sind so angeordnet, dass durch ihre jeweilige Stellung die Position und damit der Anzeigewert jedes Rades eindeutig gekennzeichnet sind. Der Encoder benötigt keine eigene Spannungsversorgung. Die während des Ablesevorgangs benötigte Energie wird über die jeweilige Schnittstelle zum M-Bus eingespeist.

Bei einem Zähler zum Erfassen des Wasserverbrauchs fließt das Wasser durch den Zähler, wodurch eine Bewegung im Zählwerk entsteht und eine Drehscheibe mit einer kleinen Metallplatte in Drehung versetzt wird. Die Auslesevorrichtung umfasst eine Spule, in der durch die Drehbewegung der Drehscheibe ein Strom erzeugt wird. Eine Abgleich zwischen dem Zählerstand und dem erzeugten Signal ist notwendig.

Bei einem Stromzähler liegt der Verbrauchswert für den Strom in der Regel schon elektronisch vor. Als Auslesevorrichtung kommt ein Einsteckmodul zum Einsatz, dass den Verbrauchswert als M-Bus Signal weitergibt.

Bei einem Zähler für den Wärmeenergieverbrauch liegt der Verbrauchswert für die Wärmeenergie in der Regel schon elektronisch vor. Als Auslesevorrichtung kommt ein Einsteckmodul zum Einsatz, dass den Verbrauchswert als M-Bus Signal weitergibt.

Herkömmliche Zähler zum Erfassen von Verbrauchsdaten mit Impulsausgang ohne direkte M-Bus Schnittstelle umfassen als Auslesevorrichtung einen Impulskonverter, der an das M-Bus-Netz angeschlossen werden kann. Ein Impulskonverter ist mit einem oder mehreren Zählern verbunden. Bei Spannungsausfall stellt eine interne Batterie die Funktion des Impulskonverters sicher. Vor der Inbetriebnahme müssen dem Impulskonverter folgende Parameter eingegeben werden:
- Eine insbesondere 8-stellige Zählernummer.
- Angaben zum Zählertyp mit der zugehörigen Einheit (Wasser in Liter, Strom in kWh...).
- Bei nicht direkt vermessenden Zählern die Impulswertigkeit.
- Vorhandener Zählerstand.

Die Schnittstelle des Datenloggers ist mit mindestens einer der vorstehend beschriebenen Auslesevorrichtungen für Zähler zum Erfassen der Verbrauchsdaten und/oder einer Messvorrichtung für die Umgebungsdaten verbunden.

Die Messvorrichtungen für die Umgebungsdaten weisen Sensoren auf, die als Umgebungsdaten die Außentemperatur des Gebietes, in dem sich das Gebäude befindet, die Außenlichtstärke oder den Bedeckungsgrad erfassen. Das analoge Ausgangssignal der Sensoren liegt in der Regel zwischen 0 - 24 mA oder 0 - 10 V. Dieses Signal wird von einem Analog-/Digitalwandler in ein M-Bus Signal umgewandelt und ebenfalls über den M-Bus dem Datenlogger zugeführt. An einem Analog-/Digitalwandler können mehrere Sensoren angeschlossen werden. Jeder an dem Analog / Digitalwandler angeschlossene Sensor wird von dem M-Bus wie ein eigenständiger M-Bus Slave behandelt.

Die Kommunikation des Servers mit dem Datenlogger erfolgt insbesondere durch eine TCP/IP-Verbindung. Mittels eines TCP/IP-Konverters wird die serielle RS232-Schnittstelle des Datenloggers in eine Netzwerkschnittstelle umgewandelt. Der TCP/IP-Konverter befindet sich in unmittelbarer Nähe des Datenloggers. Über ein Netzwerkkabel erfolgt die Verbindung beispielsweise zu einem Netzwerkschrank des Gebäudes und von dort über ein internes IT-Netzwerk zum entfernt aufgestellten Server für das Verbrauchs- bzw. Energiemanagement.

Ist eine Verbindung über ein internes IT-Netzwerk zum Server nicht möglich, erfolgt die Datenübertragung vom Datenlogger zum Server via Modem und das öffentliche Telefonnetz. Anstelle des TCP/IP-Konverters wird ein Modem installiert. Der Server wählt sich ebenfalls über Modem ein. Über diese Verbindung können die Zählerdaten übermittelt werden. Auch eine Konfiguration des Datenloggers über die Telefonverbindung ist möglich.

Der Datenlogger kann jedoch auch über das GSM-, ISDN-Netz oder über das Internet angewählt und ausgelesen werden.

Sofern auf einen Datenlogger verzichtet wird, wird eine kontinuierliche Verbindung zum Bussystem der Auslesevorrichtungen benötigt, um die dort vorliegenden Verbrauchs- und/oder Umgebungsdaten abfragen und in der Datenbank auf dem Server speichern zu können.

Nachfolgend wird die Erfindung anhand der Figuren näher erläutert. Es zeigen
- **Figuren 1 a, b**: prinzipielle Darstellungen zur Veranschaulichung des Verfahrens und Systems zum Überwachen des Energieverbrauchs eines Gebäudes,
- **Figur 2**: eine erste Darstellung zur Ermittlung einer Funktion aus Datenpunkten, die während eines Erhebungszeitraumes erfasst wurden,
- **Figur 3**: die Funktion nach Figur 2 mit einer Hüllkurve,
- **Figur 4**: eine Erfassung von Verbrauchsdaten in Form eines Verbrauchsprofils,
- **Figur 5**: eine Darstellung des Verbrauchsprofils nach Figur 4 in Verbindung mit einer zuvor ermittelten Funktion,
- **Figur 6**: eine zweite Darstellung zur Ermittlung einer Funktion aus Datenpunkten, die während eines Erhebungszeitraumes erfasst wurden,
- **Figur 7**: die Funktion nach Figur 6 mit einer Hüllkurve,
- **Figur 8**: eine schematische Darstellung eines an einen M-Bus angeschlossenen Gaszählers,
- **Figur 9**: eine schematische Darstellung eines an einen M-Bus angeschlossenen Wasserzählers,
- **Figur 10**: eine schematische Darstellung eines an einen M-Bus angeschlossenen Stromzählers,
- **Figur 11**: eine schematische Darstellung eines an einen M-Bus angeschlossenen Impulskonverters,
- **Figur 12**: eine schematische Darstellung des Kommunikationswegs des Servers mit dem Datenlogger sowie
- **Figur 13**: eine schematische Darstellung eines weiteren Kommunikationswegs des Servers mit dem Datenlogger.

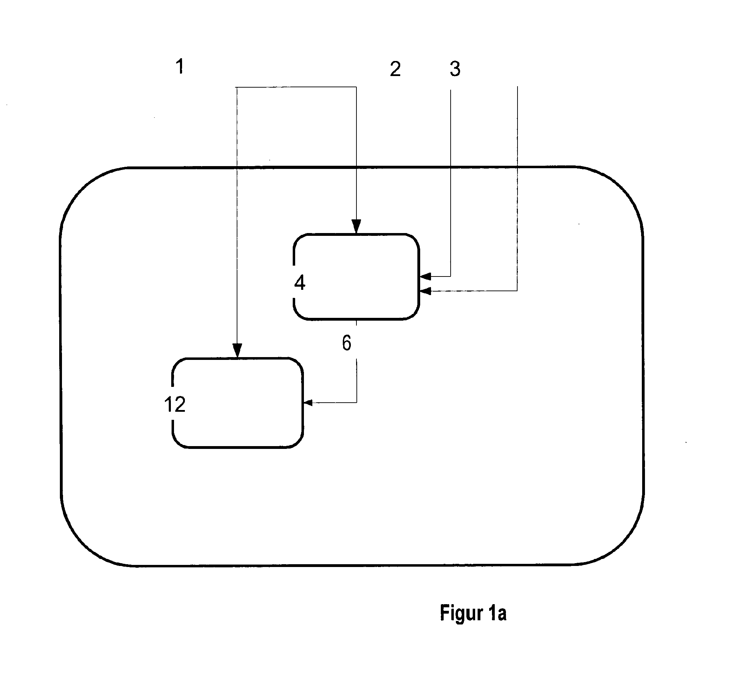

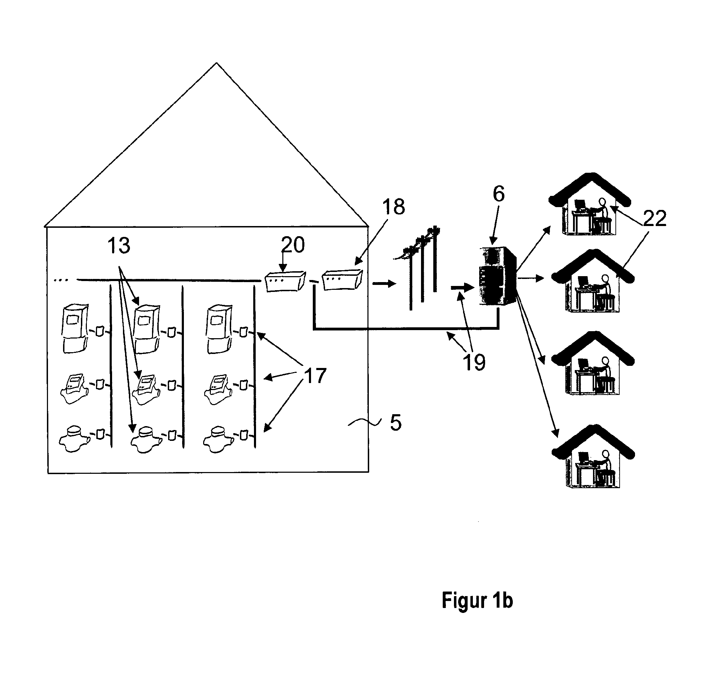

Das Verfahren zum Überwachen des Energie- oder Wasserverbrauchs von Gebäuden umfasst die nachfolgend anhand von Figur 1 näher erläuterten Schritte:

Zunächst werden Verbrauchsdaten (1), beispielsweise der Wärmeenergieverbrauch oder der Stromverbrauch eines in Figur 1 b dargestellten Gebäudes (5) in einem festgelegten Zeitraum eines Werktages, beispielsweise in einem Zeitraum von 08:00 bis 17:00 Uhr erfasst. Bei diesem Zeitraum handelt es sich um eine Betriebsphase des öffentlich genutzten Gebäudes (5).

An demselben Tag, vorzugsweise in demselben Zeitraum, werden Umgebungsdaten (2,3) erfasst. Sofern die Verbrauchsdaten (1) sich auf den Wärmeenergieverbrauch beziehen, werden als Umgebungsdaten (2) Werte der Außentemperatur erfasst. Sofern die Verbrauchsdaten (1) sich auf den Stromenergieverbrauch beziehen, werden als Umgebungsdaten (3) Werte der Außenlichtstärke erfasst. Üblicherweise wird aus den erfassten Verbrauchsdaten (1) der Gesamtverbrauch in dem festgelegten Zeitraum ermittelt. Die Umgebungsdaten (2, 3) werden vorzugsweise als gemittelte Daten erfasst.

Die zuvor beschriebene Erfassung der Verbrauchs- und Umgebungsdaten (1, 2, 3) wird periodisch an sämtlichen Werktagen über einen Erhebungszeitraum wiederholt. Unter Werktagen sind dabei sämtliche Tage zu verstehen, in denen das Gebäude (5) in einer Betriebsphase genutzt wird. Hiervon unterscheiden sich die Verbräuche an Wochenenden, an Feier- und Urlaubstagen mit deutlich reduzierten Verbrauchsdaten.

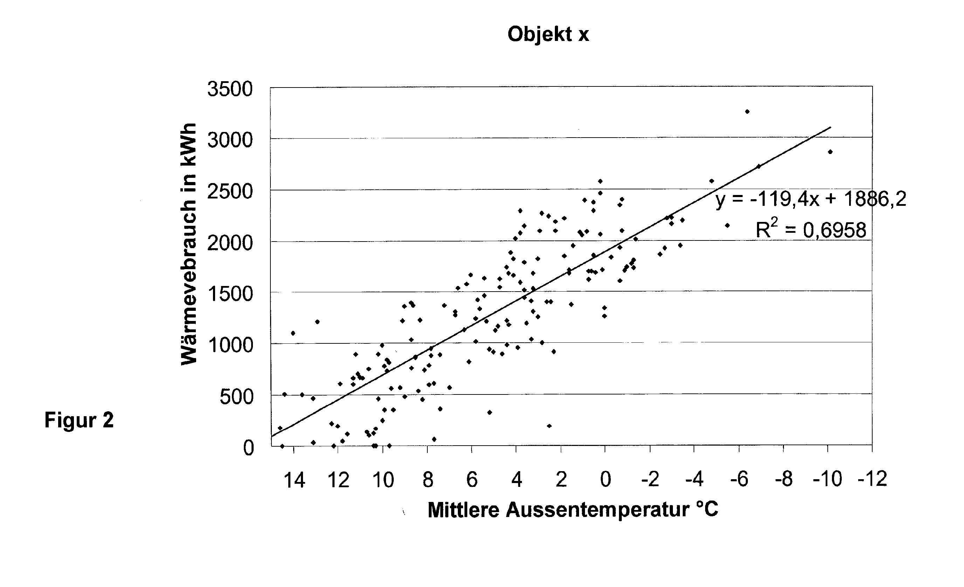

Die erfassten Verbrauchs- und Umgebungsdaten (1, 2, 3) werden in eine Datenbank (4) auf einem entfernt von dem Gebäude (5) aufgestellten Server (6) übertragen. Eine auf dem Server (6) installierte Auswertesoftware erstellt aus den übertragenen Verbrauchs- und Umgebungsdaten (1, 2, 3) Datenpunkte (8), in dem die erfassten Verbrauchsdaten (1) zu den am selben Tag erfassten Umgebungsdaten (2, 3) zugeordnet werden. Dies geschieht beispielsweise dadurch, dass der in dem festgelegten Zeitraum ermittelte Gesamtverbrauch des Gebäudes (5) den an diesem Tag erfassten und gemittelten Werten der Außentemperatur als Umgebungsdaten (2) zugeordnet wird (Figur 2).

Aus der Vielzahl der während des Erhebungszeitraums gewonnenen Datenpunkte (8) berechnet die Auswertesoftware nach Beendigung des Erhebungszeitraums eine in Figur 2 dargestellte Funktion (7) in Form einer Ausgleichsgeraden. Die Ausgleichsgerade wird aus den Datenpunkten (8) nach der Methode der kleinsten Quadrate berechnet.

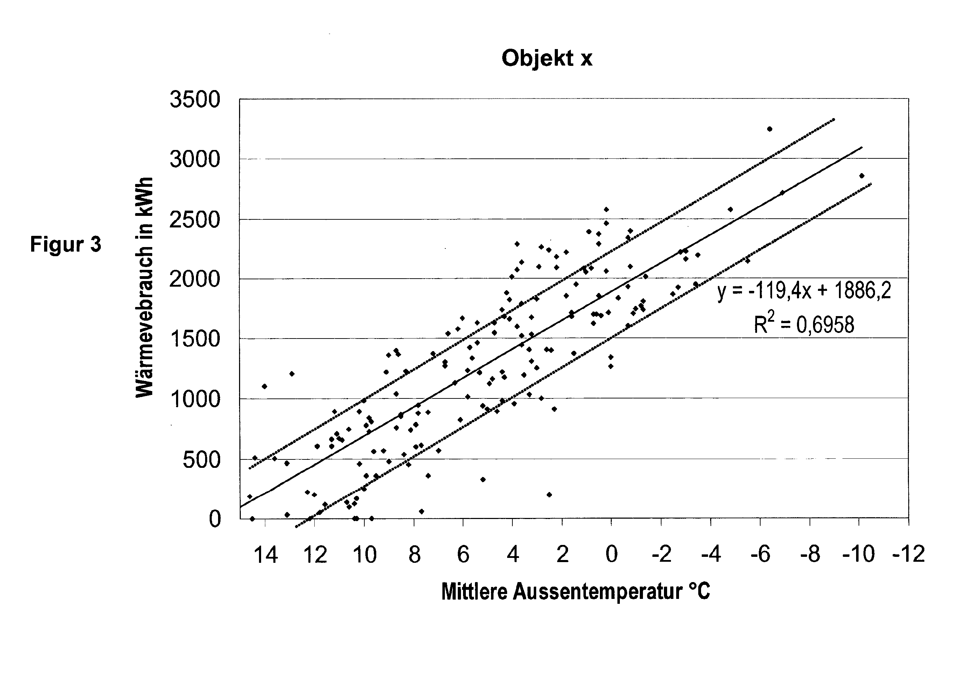

In einem weiteren, in Figur 3 dargestellten Schritt (9) erfolgt das Festlegen einer Hüllkurve (10) mit einer außenliegenden und einer innenliegenden Äquidistanten (11 a, b) zu der Ausgleichsgeraden, wobei die beiden Äquidistanten (11 a, b) eine maximal und minimal zulässige Abweichung der Verbrauchsdaten (1), in diesem Fall des Wärmeverbrauchs, von der Funktion (7) in Form der Ausgleichsgeraden definieren. Die Festlegung der Hüllkurve (10) erfolgt, indem die Auswertesoftware mittels festgelegter Faktoren die Ausgleichsgerade sowohl positiv als auch negativ verschiebt. Die Generierung der Funktion (7) sowie der zugehörigen Hüllkurve (10) erfolgt voll automatisch.

Nach dem Erhebungszeitraum werden weiterhin die Verbrauchsdaten (1) in dem Gebäude (5) erfasst und an den Server (6) übertragen. Die Auswertesoftware erstellt weiterhin Datenpunkte (8) durch Zuordnung der erfassten Verbrauchsdaten (1) zu den am selben Tag erfassten Umgebungsdaten (2). Die Auswertesoftware erzeugt ein Störungssignal (12), sofern die nach dem Erhebungszeitraum erstellten Datenpunkte (8) außerhalb der Hüllkurve (10) liegen.

Ein Störungssignal (12) wird nicht nur dann generiert, wenn die Verbrauchsdaten (1) die maximal zulässige Abweichung überschreiten, sondern auch bei Unterschreiten der minimal zulässigen Abweichung. Ein derartiges Unterschreiten kann ein Hinweis auf einen Defekt eines Zählers (13) zur Erfassung der Verbrauchsdaten (1) in dem Gebäude (5) darstellen.

In dem erfindungsgemäßen Verfahren ist es vorgesehen, dass in regelmäßigen zeitlichen Abständen nach Beendigung eines ersten Erhebungszeitraums die Funktion (7) auf der Basis der fortlaufend ermittelten Verbrauchsdaten (1) und Umgebungsdaten (2, 3) neu berechnet wird. Hierdurch können Änderungen der Verbrauchsdaten (1) des Gebäudes (5), beispielsweise in Folge von energetischen Sanierungen oder durch ein geändertes Nutzerverhalten, bei der Erzeugung etwaiger Störsignale (12) berücksichtigt werden.

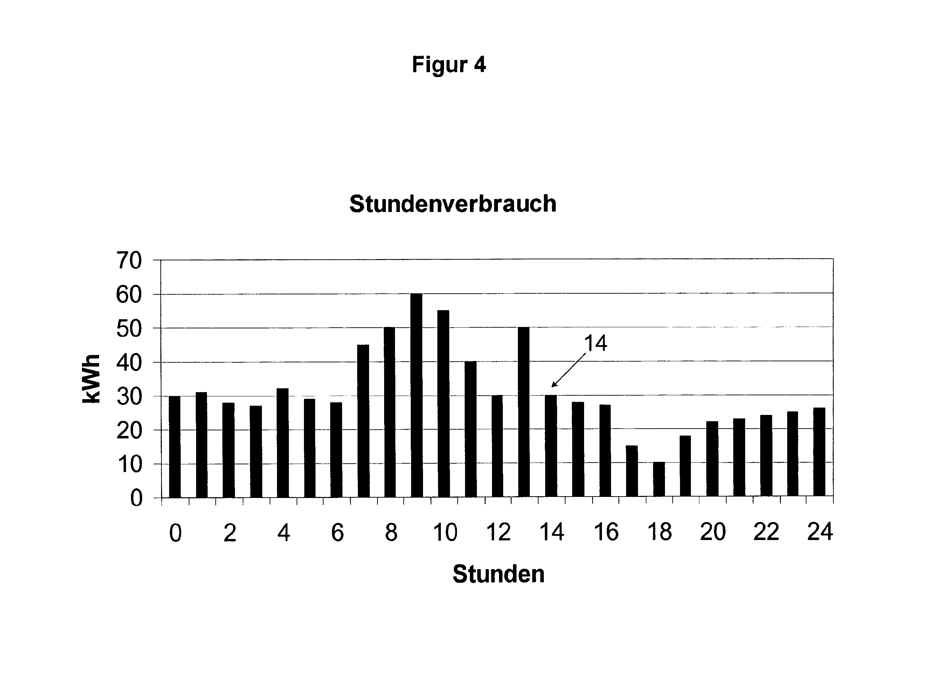

Im Rahmen des anhand der Figuren 2 und 3 beschriebenen Ausführungsbeispieles wurde in dem festgelegten Zeitraum des Tages lediglich der Gesamtverbrauch in dem jeweiligen Gebäude (5) erfasst. Alternativ besteht die Möglichkeit, die Verbrauchsdaten (1) über einen festgelegten Zeitraum eines Tages unter Berücksichtigung der Umgebungsdaten (2, 3) fortlaufend zu erfassen und ein Verbrauchsprofil (14) für den festgelegten Zeitraum zu erstellen. Diese Betriebsweise ist in Figur 4 dargestellt. Der festgelegte Zeitraum beträgt im dargestellten Ausführungsbeispiel 24 Stunden. Die Erfassung kann jedoch auch nur während einer Betriebsphase des Gebäudes (5), das heißt insbesondere zwischen 08:00 und 17:00 Uhr erfolgen. Die Erfassung der Verbrauchsprofile (14) sowie der zugehörigen Umgebungsdaten (2) über einen Erhebungszeitraum wird periodisch wiederholt. Die in Form der Verbrauchsprofile erfassten Verbrauchsdaten (1) sowie die Umgebungsdaten (2) werden in eine Datenbank (4) auf dem Server (6) übertragen. Dort werden durch Zuordnen der erfassten Verbrauchsprofile (14) zu den erfassten Umgebungsdaten (2, 3) Datenpunkte (8) erstellt.

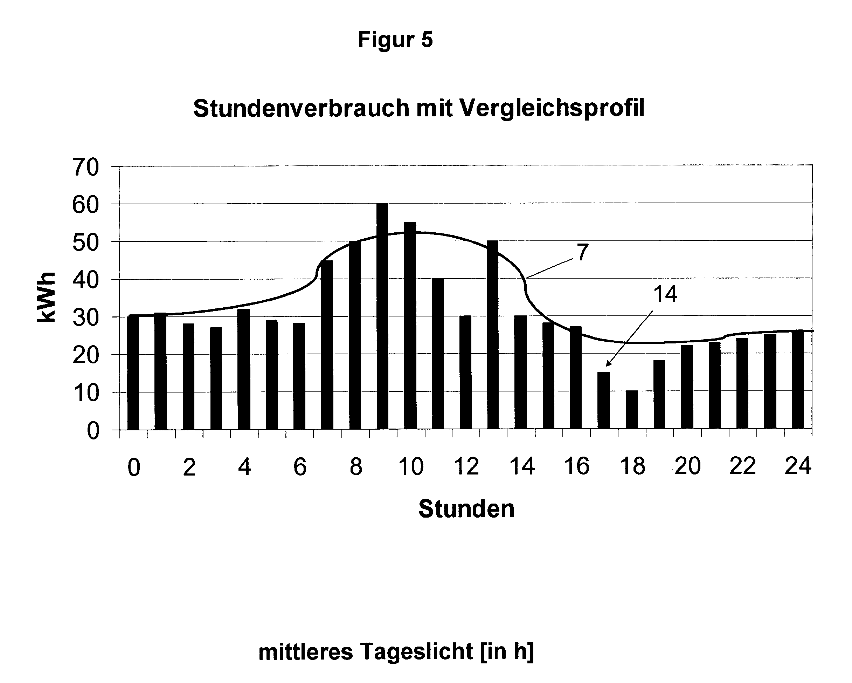

Nach Beendigung des Erhebungszeitraums wird aus sämtlichen während des Erhebungszeitraums erfassten Datenpunkten eine in Figur 5 dargestellte Funktion (7) in Form eines von den erfassten Umgebungsdaten (2, 3) abhängigen Vergleichsprofils ermittelt. Die Ermittlung erfolgt im Wege einer Ausgleichsrechnung. Die Auswertesoftware legt zu dem Vergleichsprofil eine Hüllkurve mit einer außenliegenden und einer innenliegenden Äquidistanten fest, wobei die beiden Äquidistanten eine maximal und eine minimal zulässige Abweichung des Verbrauchsprofils (14) von dem Vergleichsprofil definieren. Nach Ermittlung der Funktion (7) in Form des Vergleichsprofils jeweils für bestimmte Umgebungsdaten werden im Anschluss an den Erhebungszeitraum weiterhin die Verbrauchsdaten (1) in Form von Vergleichsprofilen in einem festgelegten Zeitraum erfasst und den erfassten Umgebungsdaten zugeordnet. Die Auswertesoftware erzeugt ein Störungssignal, sofern das erfasste Verbrauchsprofil (14) bei bestimmten Umgebungsdaten außerhalb des durch die Hüllkurve definieren Korridors um das zuvor ermittelte Vergleichsprofil für übereinstimmende Umgebungsdaten liegt.

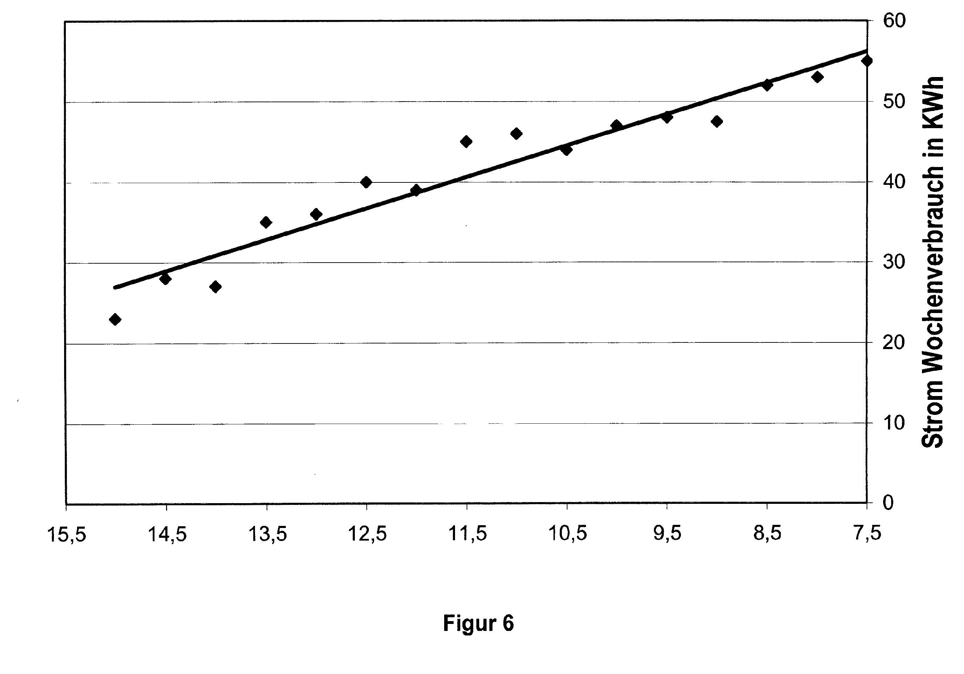

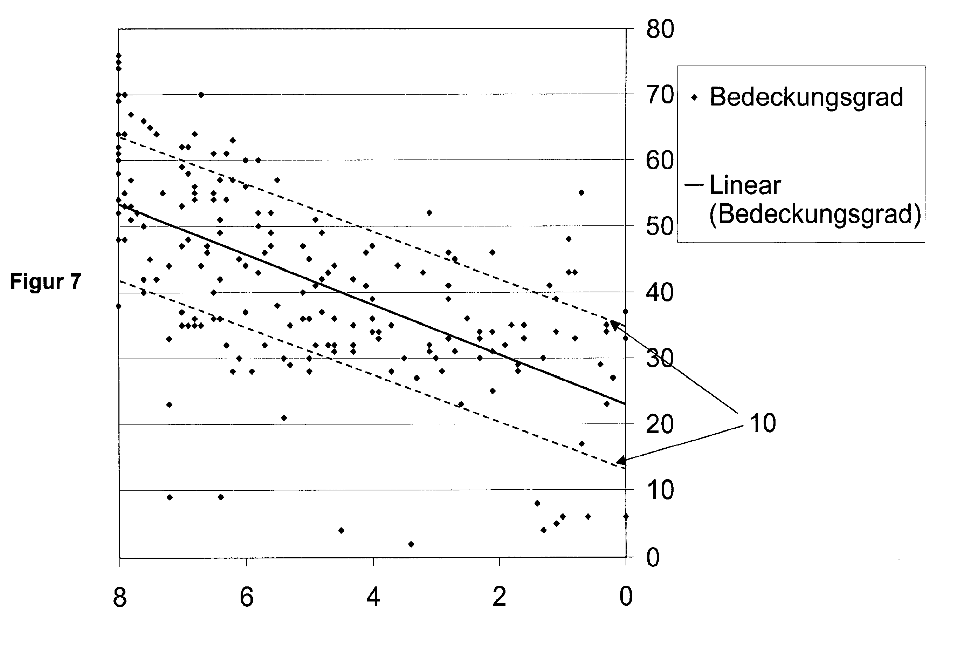

Figuren 6, 7 veranschaulichen das erfindungsgemäße Verfahren zum Überwachen des Stromverbrauchs von Gebäuden (5). Ähnlich wie bei der Überwachung des Wärmeverbrauchs (Figuren 2, 3) wird in einem festgelegten Zeitraum eines Tages, insbesondere in einer Betriebsphase des Gebäudes (5) der Gesamtstromverbrauch erfasst. An demselben Tag werden die Werte des mittleren Tageslichts in Stunden (Figur 6) bzw. des Bedeckungsgrads (Figur 7) als Umgebungsdaten (15, 16) erfasst. In gleicher Weise wie bei der Wärmeverbrauchsüberwachung werden durch periodische Wiederholung der Erfassung der Verbrauchsdaten (1) und der Umgebungsdaten (15, 16) Datenpunkte (8) erstellt und hieraus die Funktion (7) in Form einer Ausgleichsgeraden ermittelt. Die von der Auswertesoftware festgelegte Hüllkurve (10) ist nur im Ausführungsbeispiel nach Figur 7 dargestellt. Ungeachtet dessen wird auch bei der Erfassung der Werte des mittleren Tageslichts eine Hüllkurve erstellt, die jedoch in Figur 6 nicht dargestellt ist.

Das erfindungsgemäße Verfahren ist darüber hinaus geeignet, dass Daten des jeweils überwachten Gebäudes berücksichtigt werden können. In Betracht kommen Daten zum Alter und der Dämmung des Gebäudes, die in die Berechnung der Hüllkurve (10) mit einfließen können.

Figur 1 b verdeutlicht schematisch ein System zur Durchführung des Verfahrens. Das System umfasst eine Vielzahl von Auslesevorrichtungen (17) für die Zähler (13), beispielsweise für Strom, Gas und Wasser in einem Gebäude (5). Eine Datenübertragungsvorrichtung (18) überträgt die von den Auslesevorrichtungen (17) erfassten Verbrauchsdaten (1) über eine Datenfernübertragungsleitung (19), beispielsweise eine Telefonleitung, an den Server (6). Ferner umfasst das System einen Datenlogger (20) in jedem überwachten Gebäude (5) zur periodischen Wiederholung der Erfassung der Verbrauchsdaten (1). Auf dem Server (6) befindet sich eine Auswertesoftware zum Erstellen von Datenpunkten (8), zur Ermittlung der Funktion (7) aus den Datenpunkten (8), zum

Festlegen einer Hüllkurve (10) sowie zum Erzeugen eines Störungssignals (12). Ferner ist die Auswertesoftware in der Lage, Informationen, wie beispielsweise die Sollverbrauchsdaten, über eine Schnittstelle (21) im Wege der Datenfernübertragung einem oder mehreren Nutzern zugänglich zu machen. Die Datenfernübertragung erfolgt insbesondere über das Internet. Der Nutzer (22), dem die Informationen zugänglich gemacht werden, kann insbesondere auch zugleich ein Nutzer (22) des überwachten Gebäudes (5) sein. Hierdurch besteht die Möglichkeit, dass der Nutzer (22) die Auswirkungen seines Heizverhalten oder des Betriebs elektrischer Einrichtungen erkennen und, sofern Abweichungen vom Sollverbrauch vorliegen, korrigieren kann.

Der Datenlogger (20) erfasst die Verbrauchsdaten sämtlicher angeschlossenen Auslesevorrichtungen (17). Mit einstellbarer Auslesefrequenz liest er die angeschlossenen Auslesevorrichtungen (17) aus und speichert die Zählerstände. Zur Datenauslesung besitzt der Datenlogger an der Sekundär-Seite eine serielle RS-232 Schnittstelle. Über diese serielle Schnittstelle ist der Datenlogger (20) an die Datenübertragungsvorrichtung (18), beispielsweise ein Modem angeschlossen.

Die Verbindung zwischen dem Datenlogger (20) und den Auslesevorrichtungen (17) erfolgt über ein M-Bus-System. Von dem Datenlogger (20) werden die Auslesevorrichtungen (17) der Zähler (13) abgefragt. Die adressierte Auslesevorrichtung (17) antwortet daraufhin mit einem Standard-Datensatz, der aus Zählerstand, der gemessenen Größe, Gerätetyp, Seriennummer und Herstellercode besteht.

In dem in Figur 1b dargestellten Ausführungsbeispiel sind an das M-Bus-System Auslesevorrichtungen für Strom, Gas und Wasser angeschlossen.

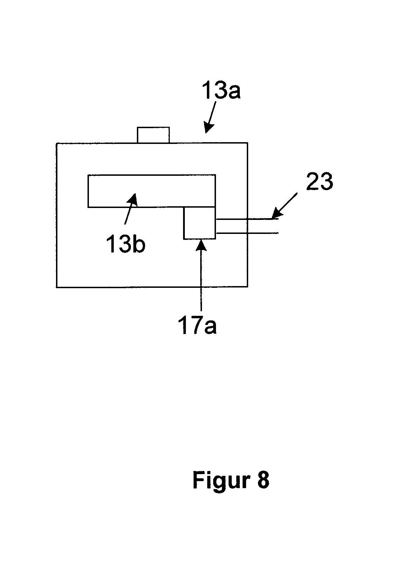

Der in Figur 8 dargestellte Gaszähler (13a) ist mit einer als Encoder (17a) ausgeführten Auslesevorrichtung (17) ausgerüstet. Die einzelnen Räder (13b) des mechanischen Zählwerkes werden von dem Encoder (17a) auf optoelektronischem Wege abgetastet. Dazu besitzen die einzelnen Räder (17a) insbesondere drei unterschiedlich lange und asymmetrisch angeordnete Schlitze, die mit fünf Lichtschranken auf ihre Stellung hin abgetastet werden. Die Schlitze sind so angeordnet, dass durch ihre jeweilige Stellung die Position und damit der Anzeigewert jedes Rades eindeutig gekennzeichnet sind. Der Encoder (17a) ist mit dem M-Bus (23) verbunden und wird vom M-Bus (23) mit Energie versorgt.

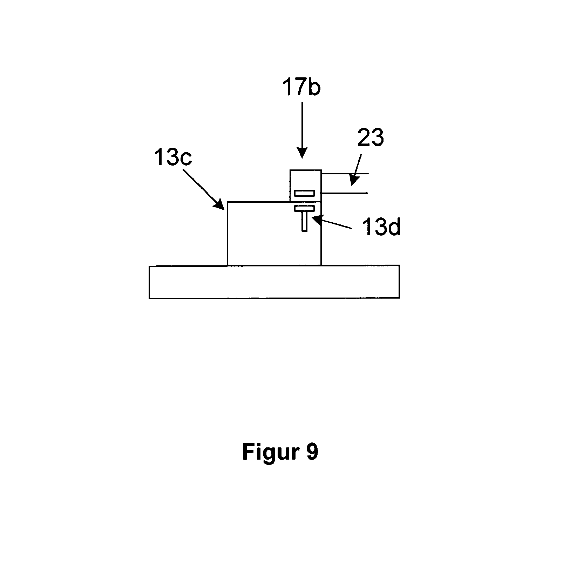

Durch den in Figur 9 dargestellten Zähler zum Erfassen des Wasserverbrauchs (13c) fließt das Wasser, wodurch eine Bewegung im Zählwerk entsteht und eine Drehscheibe (13d) mit einer kleinen Metallplatte in Drehung versetzt wird. Die Auslesevorrichtung (17) umfasst eine Spule (17b), in der durch die Drehbewegung der Drehscheibe (13d) ein Strom erzeugt wird. Die Auslesevorrichtung (17) ist mit dem M-Bus (23) verbunden.

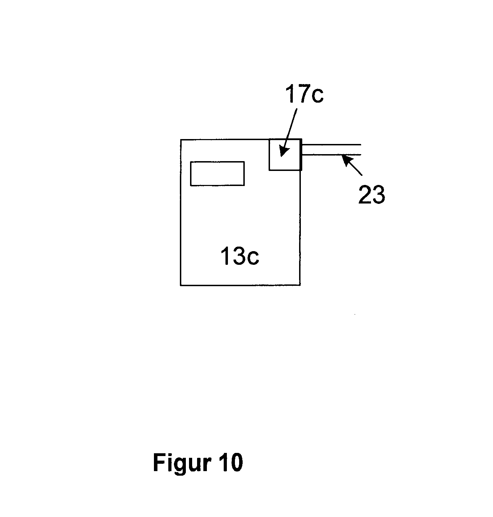

Bei dem in Figur 10 dargestellten Stromzähler (13e) liegt der Verbrauchswert für den Strom schon elektronisch vor. Als Auslesevorrichtung (17) kommt ein Einsteckmodul (17c) zum Einsatz, dass den Verbrauchswert als M-Bus Signal an den M-Bus (23) weitergibt.

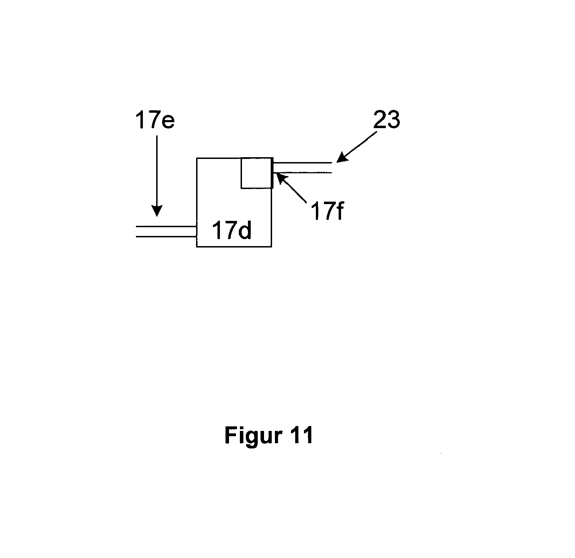

Ein herkömmlicher Zähler zum Erfassen von Verbrauchsdaten mit Impulsausgang ohne integrierte Auslesevorrichtung umfasst als separate Auslesevorrichtung einen in Figur 11 dargestellten Impulskonverter (17d), dessen Eingänge (17e) mit dem nicht dargestellten Zähler und dessen Ausgänge (17f) an den M-Bus (23) angeschlossen sind. Die Eingänge (17e) des Impulskonverters (17d) können mit mehreren Zählern verbunden sein.

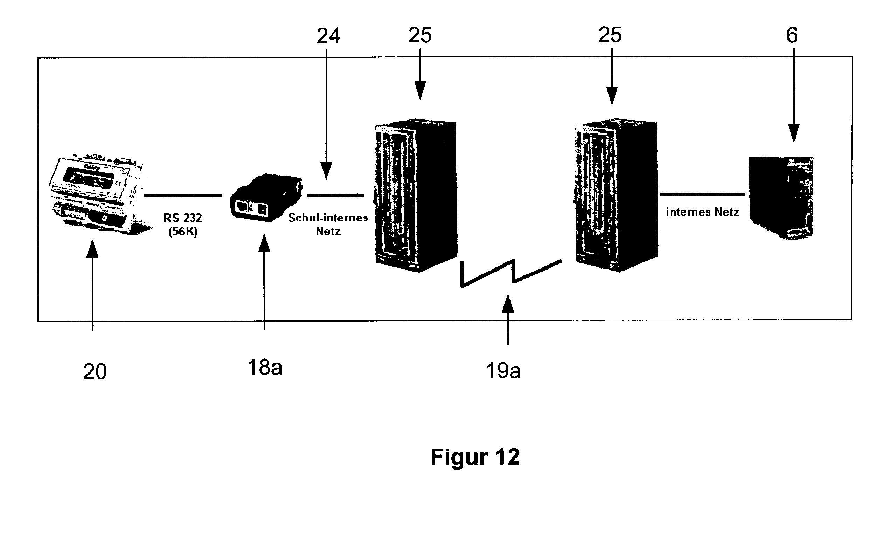

Die Kommunikation des Servers (6) mit dem Datenlogger (20) erfolgt nach Figur 12 über eine TCP/IP-Verbindung. Mittels eines TCP/IP-Konverters (18a) wird die serielle RS232-Schnittstelle des Datenloggers (20) in eine Netzwerkschnittstelle umgewandelt. Der TCP/IP-Konverter (18a) befindet sich in unmittelbarer Nähe des Datenloggers (20). Über ein Netzwerkkabel (24) erfolgt die Verbindung zu einem Netzwerkschrank (25) des Gebäudes (5) und von dort über ein internes IT-Netzwerk (19a) zum entfernt aufgestellten Server (6) für das Verbrauchsmanagement.

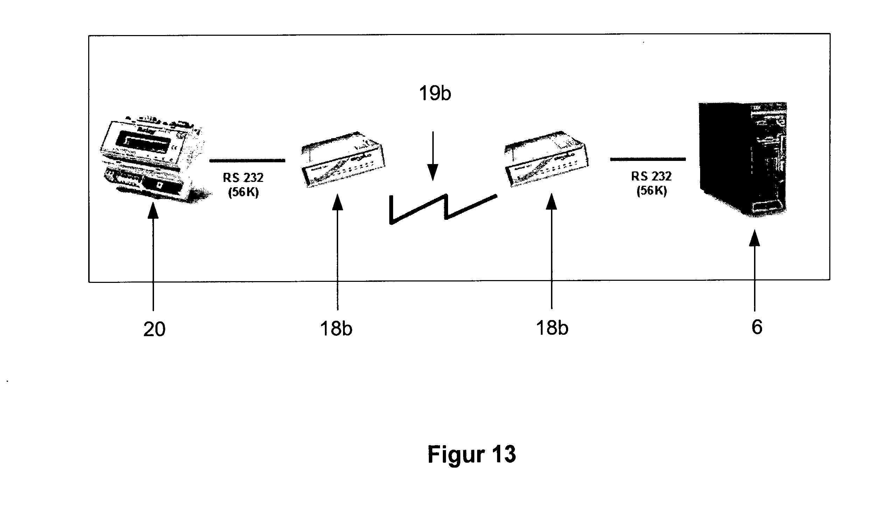

Ist eine Verbindung über ein internes IT-Netzwerk (19a) zum Server (6) nicht möglich, erfolgt die Datenübertragung vom Datenlogger (20) zum Server (6) mit Hilfe von zwei Modems (18b) über das öffentliche Telefonnetz (19b), wie dies aus Figur 13 erkennbar ist. Der Datenlogger (20) und der Server (6) verbinden sich über eine Wählverbindung über das Telefonnetz (19b). Über diese Verbindung werden die Zählerdaten übermittelt.

### Bezugszeichenliste

| **Nr.** | **Bezeichnung** |
|---|---|
| 1 | Verbrauchsdaten (Wärme/Strom) |
| 2 | Umgebungsdaten (Außentemperatur) |
| 3 | Umgebungsdaten (Außenlichtstärke) |
| 4 | Datenbank |
| 5 | Gebäude |
| 6 | Server |
| 7 | Funktion |
| 8 | Datenpunkte |
| 9 | Schritt |
| 10 | Hüllkurve |
| 11 a, b | Äquidistante |
| 12 | Störungssignal |
| 13 | Zähler |
| 13a | Gaszähler |
| 13b | Räder |
| 13c | Zähler Wasserverbrauch |
| 13d | Drehscheibe |
| 13e | Stromzähler |
| 14 | Verbrauchsprofile |
| 15 | Umgebungsdaten (mittleres Tageslicht) |
| 16 | Umgebungsdaten (Bedeckungsgrad) |
| 17 | Auslesevorrichtung |
| 17a | Encoder 17a |
| 17b | Spule |
| 17c | Einsteckmodul |
| 17d | Impulskonverter |
| 17e | Eingänge |
| 17f | Ausgänge |
| 18 | Datenübertragungsvorrichtung |
| 18a | TCP/IP Konverter |
| 18b | Modem |
| 19 | Datenfernübertragungsleitung |
| 19a | IT-Netzwerk |
| 19b | Telefonnetz |
| 20 | Datenlogger |
| 21 | Schnittstelle |
| 22 | Nutzer |
| 23 | M-Bus |
| 24 | Netzwerkkabel |
| 25 | Netzwerkschrank |

## Patentansprüche

1. Verfahren zum Überwachen des Energie- oder Wasserverbrauchs von Gebäuden umfassend die Schritte
- Erfassen von Verbrauchsdaten (1) in dem Gebäude (5) in mindestens einem festgelegten Zeitraum eines Tages,
- Erfassen von Umgebungsdaten (2, 3) an demselben Tag, die mit den Verbrauchsdaten in einem kausalen Zusammenhang stehen,
- periodische Widerholung der Erfassung der Verbrauchs- und Umgebungsdaten (1, 2, 3) über einen sich über eine Vielzahl von Tagen erstreckenden Erhebungszeitraum,
- Übertragen der Verbrauchdaten (1) und der Umgebungsdaten (2, 3) in eine Datenbank (4) auf einem Server (6),
- Erstellen von Datenpunkten (8) durch Zuordnen der erfassten Verbrauchdaten (1) zu den am selben Tag erfassten Umgebungsdaten (2, 3),
- Ermittlung einer Funktion (7) aus den Datenpunkten (8) im Wege einer Ausgleichungsrechnung nach Beendigung des Erhebungszeitraums,
- Festlegen einer Hüllkurve (10) mit einer außenliegenden und einer innenliegenden Äquidistanten (11a, b) zu der Funktion (7), wobei die beiden Äquidistanten (11a, b) eine maximal und minimal zulässige Abweichung der Datenpunkte (8) von der Funktion (7) definieren sowie
- Erzeugen eines Störungssignals (12), sofern die nach dem Erhebungszeitraum erstellten Datenpunkte (8) außerhalb der Hüllkurve liegen.

2. Verfahren nach Anspruch 1, **dadurch gekennzeichnet, dass** als Verbrauchsdaten (1) ein Energieverbrauch und/oder ein Wasserverbrauch des Gebäudes (5) erfasst werden.

3. Verfahren nach Anspruch 1 oder 2, **dadurch gekennzeichnet, dass** als Umgebungsdaten (1) Werte
- der Außentemperatur (2) und/oder
- des Bedeckungsgrad (16) und/oder
- der Außenlichtstärke (3) und/oder
- der Tageslichtsstunden (15)
eines Gebietes, indem sich das Gebäude (5) befindet, erfasst werden.

4. Verfahren nach einem der Ansprüche 1 bis 3, **dadurch gekennzeichnet, dass** die Umgebungsdaten (1) als über einen festgelegten Zeitraum, insbesondere den Tag der Erfassung gemittelte Daten erfasst werden.

5. Verfahren nach einem der Ansprüche 1 bis 4, **dadurch gekennzeichnet, dass** die Nutzung des Gebäudes (5) sich in Betriebs- und Nichtbetriebsphasen unterteilt und jeder festgelegte Zeitraum zum Erfassen der Verbrauchsdaten (1) vollständig entweder in eine Betriebs- oder Nichtbetriebsphase fällt.

6. Verfahren nach einem der Ansprüche 1 bis 5, **dadurch gekennzeichnet, dass** der Erhebungszeitraum ausschließlich Tage mit Betriebsphasen des Gebäudes oder ausschließlich Tage ohne Betriebsphasen des Gebäudes umfasst.

7. Verfahren nach einem der Ansprüche 1 bis 7, **dadurch gekennzeichnet, dass** die Ausgleichsrechnung nach der Methode der kleinsten Quadrate erfolgt.

8. Verfahren nach einem der Ansprüche 1 bis 7, **dadurch gekennzeichnet, dass** die Verbrauchsdaten (1) und/oder die Umgebungsdaten (2, 3) im Wege der Datenfernübertragung von dem Gebäude (5) zu dem entfernt von dem Gebäude (5) aufgestellten Server (6) übertragen werden.

9. Verfahren nach einem der Ansprüche 1 bis 7, **dadurch gekennzeichnet, dass** für jedes Gebäude (5) Sollverbrauchsdaten mit der im Erhebungszeitraum ermittelten Funktion (7) und den nach dem Erhebungszeitraum erfassten Umgebungsdaten (3) als Funktionsargument berechnet werden.

10. Verfahren nach Anspruch 10, **dadurch gekennzeichnet, dass** zumindest die Sollverbrauchsdaten im Wege der Datenfernübertragung einem Nutzer (22) zugänglich gemacht werden.

11. System zum Überwachen des Energie- oder Wasserverbrauchs von Gebäuden umfassend
- mindestens eine Auslesevorrichtung (17) für Zähler (13) zum Erfassen von Verbrauchsdaten in dem Gebäude (5) in mindestens einem festgelegten Zeitraum eines Tages,
- mindestens eine Messvorrichtung zum Erfassen von Umgebungsdaten (2, 3) an demselben Tag, die mit den Verbrauchsdaten (1) in einem kausalen Zusammenhang stehen,
- mindestens eine Datenübertragungsvorrichtung (18) zum Übertragen der Verbrauchdaten (1) und der Umgebungsdaten (2, 3) in eine Datenbank (4) auf einem Server (6),
- Mittel (20) zur periodischen Widerholung der Erfassung der Verbrauchs- und Umgebungsdaten (1, 2, 3) über einen sich über eine Vielzahl von Tagen erstreckenden Erhebungszeitraum,
- eine auf dem Server (6) betriebene Software zum
- Erstellen von Datenpunkten (8) durch Zuordnen der erfassten Verbrauchdaten (1) zu den am selben Tag erfassten Umgebungsdaten (2, 3),
- Ermittlung einer Funktion (7) aus den Datenpunkten (8) im Wege einer Ausgleichungsrechnung nach Beendigung des Erhebungszeitraums,
- Festlegen einer Hüllkurve (10) zu der Funktion, wobei die beiden Äquidistanten (11a, b) eine maximal und minimal zulässige Abweichung der Datenpunkte (8) von der Funktion definieren sowie
- zum Erzeugen eines Störungssignals (12), sofern die nach dem Erhebungszeitraum erstellten Datenpunkte (8) außerhalb der Hüllkurve (10) liegen
- und eine Schnittstelle (21) zumindest zur Übertragung des Störungssignals (12) an eine Ausgabeeinheit.

12. System nach Anspruch 9, **dadurch gekennzeichnet, dass** als Mittel zur periodischen Widerholung der Erfassung der Verbrauchs- und/oder Umgebungsdaten (1, 2, 3) ein Datenlogger (20) zwischen jede Auslesevorrichtung (17) und die Datenübertragungsvorrichtung (18) geschaltet ist.
